# EUROPÄISCHE PATENTSCHRIFT

(11) **EP 1 020 410 B1**
(45) Veröffentlichungstag und Bekanntmachung des Hinweises auf die Patenterteilung: **19.03.2003**
(21) Anmeldenummer: 99121317.4
(22) Anmeldetag: 26.10.1999
(51) Int. Cl.: C03B 9/36, C03B 9/29

(54) **Vorrichtung zum Fertigblasen eines Hohlglasgegenstands**
Apparatus for the finishing blowing of a hollow glass object
Appareil pour le soufflage d'un objet en verre creux

(30) Priorität: 12.01.1999 DE 19900726
(43) Veröffentlichungstag der Anmeldung: 19.07.2000
(73) Patentinhaber: FIRMA HERMANN HEYE, D-31683 Obernkirchen (DE)
(72) Erfinder: Schneider, Wilhelm, 31749 Auetal (DE); Uhe, Heinrich, Dr., 32602 Vlotho (DE); Bögert, Hermann, 31749 Auetal (DE)
(74) Vertreter: Callies, Rainer

(56) Entgegenhaltungen:
- EP-A- 0 118 295
- US-A- 4 339 264

## Beschreibung

Die Erfindung betrifft eine Vorrichtung nach dem Oberbegriff des Anspruchs 1.

Bei einer bekannten Vorrichtung dieser Art (COMPREHENSIVE BLOWHEAD CONCEPT - FINAL BLOW EXHAUST FEATURE der Firma Dameron Alloy Foundries, Compton, California, U.S.A.) ist der Blaskopf fest mit dem Adapter verbunden. Der Adapter seinerseits ist über eine Bajonettverbindung mit der in dem Halter verschiebbaren Hülse verbunden. Die Anordnung weist erhebliches radiales und axiales Spiel auf. Blaskopf und Adapter können beim Aufsetzen des Blaskopfes auf die Fertigform gegen die Kraft einer Feder axial ausweichen. Bei einem Winkelfehler zwischen der unteren Fläche des Blaskopfes und der äußeren Fläche der Fertigform kann sich der Blaskopf dieser Situation nicht anpassen. Er kann lediglich axial ausweichen. Das führt zu einseitigem Verschleiß zwischen Blaskopf und Fertigform. Das Spiel zwischen dem Blaskopf und der Blaskopfaufnahme führt zu Verschleiß an den Aufnahmestellen durch Beschleunigungskräfte der Hub- und Schwenkbewegungen des Blaskopfmechanismus.

Aus der EP 0 118 295 A1 und der US 4 339 264 A, Fig. 24, 31 und 32, ist für das Drehformen (paste mold process) bei einer Drehtisch-Preß-Blase-Maschine ein Blaskopfmechanismus mit Blasköpfen bekannt, die jeweils mit einem Dichtungsring auf einer Preßstempelführungsbuchse aufsetzen. Zur Ermöglichung des Drehformens sind der Dichtungsring und ein komplementäres Innenteil des Blaskopfes jeweils über ein Kugellager drehbar gelagert. Bei der EP 0 118 295 A1 wird die Verbindung des Dichtungsrings mit dem Innenteil durch eine Kugelflächenpaarung gebildet, wobei in dem Dichtungsring die Kugelpfanne und an dem Innenteil eine Kalotte vorgesehen sind. So kann sich der Dichtungsring im Winkel auf die gegenüberliegende äußere Fläche der Preßstempelführungsbuchse einstellen. Die übrigen Merkmale der Blaskopfvorrichtung sind ebenfalls speziell auf das Drehformen abgestellt und verhältnismäßig aufwendig.

Der Erfindung liegt die Aufgabe zugrunde, bei einer Vorrichtung der eingangs genannten Art die Masse der Vorrichtung herabzusetzen, den Blaskopf im Betrieb zu jeder Zeit spielfrei einzuspannen und eventuelle Winkelfehler zwischen einer unteren Fläche des Blaskopfes und einer äußeren Fläche der Fertigform selbsttätig auszugleichen.

Diese Aufgabe ist durch die Merkmale des Anspruchs 1 gelöst. Hülse und Fortsatz sind fest miteinander verbunden. Die Lagerpfanne des Niederhalters liegt aufgrund der Federvorspannung im Betrieb stets spielfrei an der Kalotte des Blaskopfes an. So ist die gesamte Vorrichtung im Betrieb praktisch spielfrei und entsprechend gut verschleißgeschützt. Außerdem kann sich der Blaskopf auf einen erwähnten Winkelfehler mühelos einstellen. Dazu überwindet der Blaskopf lediglich die über die Federkraft voreinstellbare Reibung zwischen der Kalotte und der Lagerpfanne. Die Masse der Vorrichtung ist deutlich reduziert. Dies hat entsprechend geringere Beschleunigungskräfte bei den Hub- und Schwenkbewegungen des Halters zur Folge. Vorzugsweise ist die Hülse gegen Drehung um ihre eigene Achse gesichert. Die durch die Einlaßdurchbrechungen in dem Blaskopf geführte Druckluft dient einerseits zur Kühlung des Blaskopfes und andererseits zur Kühlung der Mündung radial von außen. Die Auslaßkanäle des Blaskopfes können z.B. als Radialnuten ausgebildet sein, die in einer der Fertigform zugewandten Stützfläche des Blaskopfes vorgesehen sind.

Die Lagerpfanne gemäß Anspruch 2 ist einfach herzustellen und von wünschenswert geringer Masse.

Bei der Ausbildung gemäß Anspruch 3 ergibt sich der zusätzliche Vorteil, daß die Druckluft ohne zusätzliche Dichtungsmittel durch die ringförmige Berührungsfläche zwischen der Kalotte und der Lagerpfanne nach außen hin abgedichtet wird.

Durch die Merkmale jedes der Ansprüche 4 und 5 wird eine besonders günstige Kühlung des Blaskopfes und der Mündung durch die Druckluft erreicht.

Die Merkmale des Anspruchs 6 gestatten die vorerwähnte Winkelanpassung des Blaskopfes auf besonders einfache Weise.

Gemäß Anspruch 7 kann die Abluft besonders günstig nach außen hin abgeführt werden. Außerdem führen die Auslaßfenster im Fortsatz zu weiterer Massenreduzierung der Vorrichtung.

Gemäß Anspruch 8 läßt sich der Blaskopf sehr einfach und schnell bei Bedarf wechseln.

Die Merkmale des Anspruchs 9 erleichtern die Herausbewegung des rückwärtigen Fortsatzes und seine Fixierung in der herausbewegten Stellung und damit den Wechsel des Blaskopfes.

Gemäß Anspruch 10 ist eine einfache und wirkungsvolle Verbindung zwischen Blaskopf und Lagerpfanne geschaffen. Außerdem ist der Austausch des Blaskopfes dadurch erheblich erleichtert. Die Lösung der Bajonettverbindung kann z.B. durch eine Axialbewegung des Blaskopfes und seine anschließende Drehung um 90° geschehen.

Die Merkmale des Anspruchs 11 fördern diesen letzteren Zweck noch.

Diese und weitere Merkmale und Vorteile der Erfindung werden nachfolgend anhand des in den Zeichnungen dargestellten Ausführungsbeispiels der Erfindung näher erläutert. Es zeigt:
Fig. 1 einen Längsschnitt nach Linie I-I in Fig. 2 durch eine Vorrichtung, Fig. 2 die teilweise geschnittene Ansicht nach Linie II-II in Fig. 1,
Fig. 3 die Schnittansicht gemäß Fig. 1 in einer anderen Betriebsstellung,
Fig. 4 einen Längsschnitt durch die Hülse gemäß Fig. 1,
Fig. 5 die Ansicht gemäß Linie V-V in Fig. 4,
Fig. 6 die Schnittansicht nach Linie VI-VI in Fig. 4,
Fig. 7 einen teilweisen Längsschnitt durch den Niederhalter gemäß Fig. 1,
Fig. 8 die Ansicht gemäß Linie VIII-VIII in Fig. 7,
Fig. 9 die Ansicht gemäß Linie IX-IX in Fig. 7,
Fig. 10 die Schnittansicht nach Linie X-X in Fig. 7,
Fig. 11 den Längsschnitt gemäß Linie XI-XI in Fig. 14 durch den Blaskopf gemäß Fig. 1,
Fig. 12 die Ansicht gemäß Linie XII-XII in Fig. 11,
Fig. 13 die Ansicht gemäß Linie XIII-XIII in Fig. 11,
Fig. 14 die Ansicht gemäß Linie XIV-XIV in Fig. 11,
Fig. 15 die Schnittansicht nach Linie XV-XV in Fig. 11 und
Fig. 16 die Schnittansicht nach Linie XVI-XVI in Fig. 15.

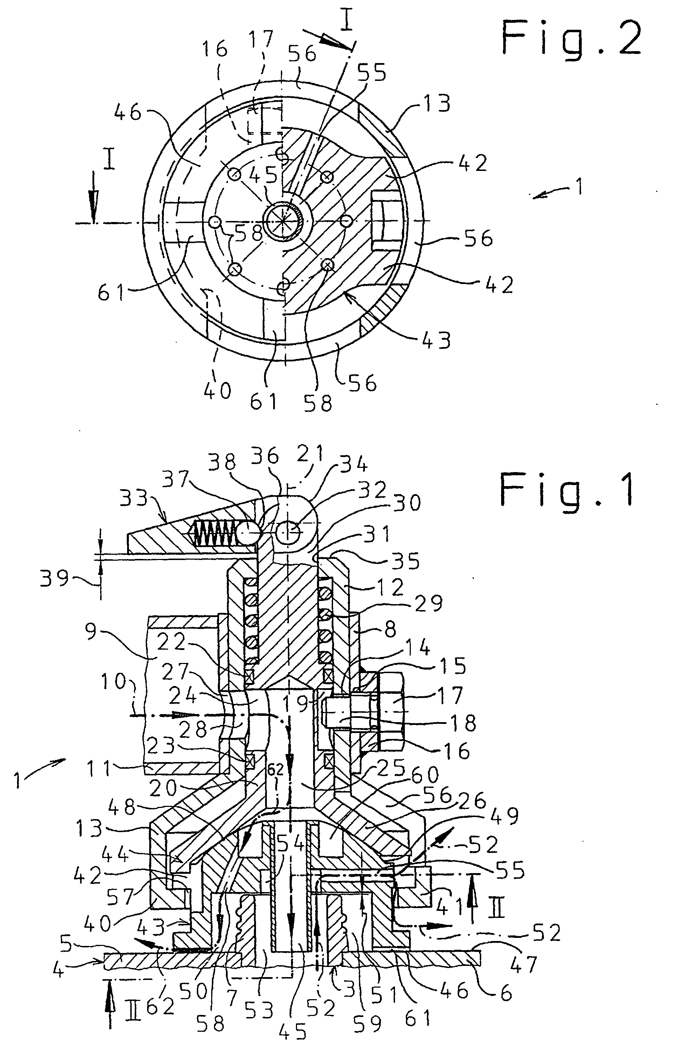

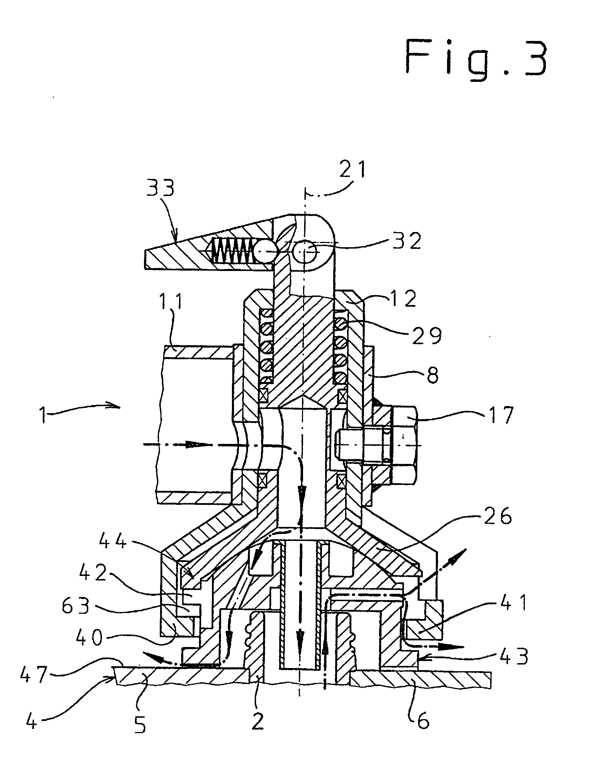

Fig. 1 zeigt eine Vorrichtung 1 zum Fertigblasen eines Hohlglasgegenstands 2 (Fig. 3) aus einem Külbel 3 in einer Fertigform 4 einer nicht weiter dargestellten Glasformmaschine. Bei dieser Glasformmaschine handelt es sich um eine PreB-Blas- oder eine Blas-Blas-Maschine, insbesondere eine sogenannte I.S.(Individual Section)- Glasformmaschine, mit einer Vorformstation, in der das Külbel 3 geformt wird, und einer Fertigformstation mit der Fertigform 4, in der aus dem Külbel 3 der Hohlglasgegenstand 2 fertiggeblasen wird. Die Fertigform 4 weist in an sich bekannter Weise Fertigformhälften 5 und 6 auf, die gemäß Fig. 1 bei geschlossener Fertigform eine Mündung 7 des Külbels 3 untergreifen und einen Hohlraum definieren, in den hinein das noch schmelzflüssige Külbel 3 zu dem fertigen Hohlglasgegenstand 2 ausgeblasen wird.

Diesem Fertigblasen dient die Vorrichtung 1. Die Vorrichtung 1 weist einen oder mehrere, im Abstand voneinander angeordnete Halter 8 auf, die jeweils, z.B. durch Schweißen, an einem Träger 11 befestigt sind. Der Träger 11 mitsamt dem Halter 8 oder den Haltern 8 ist in an sich bekannter Weise heb- und senkbar und um eine senkrechte Achse schwenkbar. Der Träger 11 weist einen Hohlraum 9 auf, dem Druckluft gemäß einem Pfeil 10 zuführbar ist.

Jeder Halter 8 weist vorzugsweise eine kreisringförmige Querschnittsfläche auf und nimmt mit einer Schiebepassung eine Hülse 12 auf, die unterhalb des Halters 8 einen nach unten hin erweiterten Fortsatz 13 aufweist. Die Hülse 12 ist mit einer radialen Bohrung 14 versehen, die mit einer Gewindebohrung 15 in dem Halter 8 und in einem außen auf den Halter 8 aufgeschweißten Verstärkungsring 16 fluchtet.

Wie Fig. 2 zeigt, sind in Fig. 1 die Bohrungen 14, 15, der Verstärkungsring 16 und ein in die Gewindebohrung 15 eingeschraubter Schraubbolzen 17 winkelversetzt gezeichnet. Ein Bolzen 18 des Schraubbolzens 17 durchdringt die Bohrung 14 und ragt in einen Axialschlitz 19 in einem Niederhalter 20. Der Axialschlitz 19 erstreckt sich parallel zu einer Längsachse 21 der Vorrichtung 1 und gestattet dem Niederhalter 20 in Grenzen eine axiale Bewegung relativ zu der Hülse 12. Der Niederhalter 20 ist mit einer Gleitpassung der Hülse 12 geführt und gegenüber der Hülse 12 durch Ringdichtungen 22 und 23 abgedichtet. Zwischen den Ringdichtungen 22, 23 weist der Niederhalter 20 eine Durchbrechung 24 auf, die in einen Kanal 25 in dem Niederhalter 20 mündet. Unten mündet der Kanal 25 in einem Scheitel einer hohlkegelstumpfförmig ausgebildeten, sich nach unten erweiternden Lagerpfanne 26 des Niederhalters 20. Die Durchbrechung 24 ist groß genug bemessen, um in jeder axialen Betriebsstellung des Niederhalters 20 mit einer Bohrung 27 in dem Halter 8 und einer Bohrung 28 in der Hülse 12 zu fluchten.

Zwischen dem Niederhalter 20 und der Hülse 12 ist eine als Druckfeder ausgebildete Feder 29 angeordnet, durch welche der Niederhalter nach unten vorgespannt ist. Der Niederhalter 20 durchdringt mit einem rückwärtigen Fortsatz 30 eine Durchbrechung 31 der Hülse 12. Der rückwärtige Fortsatz 30 weist eine sich quer zu der Längsachse 21 erstreckende Achse 32 auf. An der Achse 32 ist ein Exzenterhebel 33 angelenkt, dessen Exzenter 34 an einer Stirnfläche 35 der Hülse 12 abstützbar ist. Der Exzenter 34 ist an seiner Stelle mit dem größten Radius mit einer Stützfläche 36 versehen. Die Stützfläche 36 kann dann in Berührung mit der Stirnfläche 35 treten, wenn der Exzenterhebel 33 um die Achse 32 im Uhrzeigersinn um 180° gedreht worden ist. Bei dieser Drehung verläßt eine federvorgespannte Kugel 37 eine Kugelraste 38 in dem rückwärtigen Fortsatz 30, die bis dahin den Exzenterhebel 33 in seiner in Fig. 1 gezeichneten passiven Stellung gehalten hat. In dieser passiven Stellung besteht ein Mindestabstand 39 zwischen dem Exzenterhebel 33 und der Stirnfläche 35.

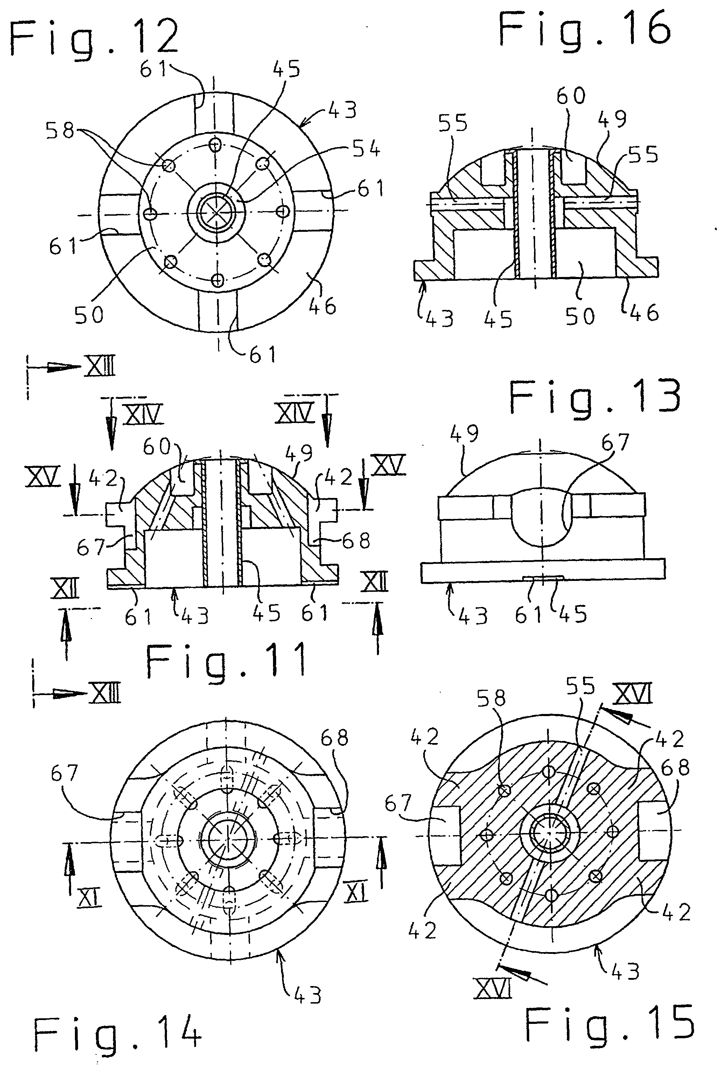

Der Fortsatz 13 weist an seinem freien Ende Anschlagelemente 40 und 41 auf, die Halteorgane 42 (vgl. Fig. 15) eines Blaskopfes 43 hintergreifen. Der Blaskopf 43 und die Lagerpfanne 26 bilden eine leicht lösbare Bajonettverbindung 44.

Der Blaskopf 43 weist eine zentrale Durchbrechung auf, in der ein Blasrohr 45 befestigt ist. In Fig. 1 ist derjenige Augenblick zeichnerisch dargestellt, in welchem die Vorrichtung 1 so weit abgesenkt wurde, daß eine untere Stützfläche 46 des Blaskopfes 43 gerade eben Kontakt mit einer äußeren Fläche 47 der Fertigform 4 gemacht hat. In diesem Zustand liegen die Halteorgane 42 des Blaskopfes 43 an den Anschlagelementen 40, 41 des Fortsatzes 13 an und wird die Lagerpfanne 26 durch die Feder 29 mit einer ringförmigen Berührungsfläche 48 an eine Kalotte 49 des Blaskopfes 43 angedrückt. Der Blaskopf 43 ist dabei mit einer Ausnehmung 50 über die in der geschlossenen Fertigform 4 gehaltene Mündung 7 des Külbels 3 gestülpt, wobei eine obere Begrenzungsfläche der Mündung 7 sich in einem geringen Abstand 51 von einer oberen Begrenzungsfläche der Ausnehmung 50 befindet. Die Mündung 7 des Külbels 3 ist zu diesem Zeitpunkt schon verfestigt, während der Rest des Külbels 3 in der Formausnehmung der Fertigform 4 noch schmelzflüssig und formbar ist.

Wenn im Gegensatz zu der in Fig. 1 gezeichneten Situation die Stützfläche 46 und die äußere Fläche 47 nicht parallel zueinander sind, sondern einen Winkel miteinander bilden, setzt der Blaskopf 43 mit einem Rand der Stützfläche 46 einseitig auf der äußeren Fläche 47 auf. In jedem Fall wird von diesem Augenblick an die Vorrichtung 1 noch etwas weiter bis in die in Fig. 3 gezeigte Stellung abgesenkt. Dies hat zur Folge, daß sich die Halteorgane 42 von den Anschlagelementen 40, 41 lösen und der Blaskopf 43 sich mit seiner Kalotte 49 in der Lagerpfanne 26 so weit dreht, bis der Winkelfehler ausgeglichen ist und die Stützfläche 46 ringsum auf der äußeren Fläche 47 aufliegt.

In diesem Augenblick kann die Druckluft eingeschaltet werden und in Richtung des Pfeils 10 durch die Bohrungen 27, 28 und die Durchbrechung 24 in den Kanal 25 strömen. Von dort gelangt ein Teil der Druckluft durch das in die Mündung 7 eingetauchte Blasrohr 45 in das Innere des Külbels 3 und bläst das Külbel 3 in an sich bekannter Weise zu dem fertigen Hohlglasgegenstand 2 aus. Abluft aus dem Külbel 3 bzw. dem fertigen Hohlglasgegenstand 2 strömt in Richtung der Pfeile 52 durch einen Freiraum 53 zwischen dem Blasrohr 45 und der Mündung 7, einen Ringraum 54 und Auslaßdurchbrechungen 55 in dem Blaskopf 43 nach außen. Die Abluft 52 tritt einerseits durch Auslaßfenster 56 in dem Fortsatz 13 und andererseits durch einen Spalt 57 zwischen den Anschlagelementen 40, 41 und dem Blaskopf 43 in die Umgebung aus.

Zur Kühlung des Blaskopfes 43 und der Mündung 7 radial von außen wird ein weiterer Teil der Druckluft aus dem Kanal 25 durch Einlaßdurchbrechungen 58 in dem Blaskopf 43 in einen Ringraum 59 der Ausnehmung 50 radial außerhalb der Mündung 7 eingeleitet. Die Einlaßdurchbrechungen 58 sind über den Umfang des Blaskopfes 43 verteilt und werden durch einen in dem Blaskopf 43 ausgebildeten, das Blasrohr 45 umgebenden, zu der Lagerpfanne 26 hin offenen Ringkanal 60 mit Kühlluft gespeist. In der Stützfläche 46 des Blaskopfes 43 sind mehrere, über den Umfang verteilte, als Radialnuten ausgebildete Auslaßkanäle 61 vorgesehen. Die Auslaßkanäle 61 lassen die Kühlluft 62 in der in Fig. 1 dargestellten Weise nach außen hin austreten.

Wenn in der Fertigformstation der Glasformmaschine mehrere, z.B. zwei oder drei, Hohlglasgegenstände 2 gleichzeitig fertiggeblasen werden, sind entweder zwei oder drei Blasköpfe 43 mit den zugehörigen Mechanismen entlang dem Träger 11 verteilt angeordnet. Jeder dieser Mechanismen kann leicht insgesamt ausgebaut werden. Dazu wird der Schraubbolzen 17 herausgedreht und der Exzenterhebel 33 in eine zu der Längsachse 21 parallele Stellung hochgeschwenkt. Sodann kann die Hülse 12 mit dem Rest des Mechanismus nach unten hin aus dem Halter 8 herausgezogen und gegebenenfalls ausgetauscht oder gewartet werden.

Fig. 2 zeigt weitere Einzelheiten der Vorrichtung gemäß Fig. 1.

Fig. 3 zeigt die Betriebsstellung der Vorrichtung 1, bei der bei auf die Fertigform 4 aufgesetztem Blaskopf 43 der Träger 11 mit dem Halter 8 und der Hülse 12 gegen die Kraft der Feder 29 in Richtung der Fertigform 4 weiterbewegt wurde, bis zwischen den Halteorganen 42 des Blaskopfes 43 und den Anschlagelementen 40, 41 der Hülse 12 ein Spalt 63 entstanden ist. Der Spalt 63 ist so groß, daß der Blaskopf 43 jede zu seiner ebenen Auflage auf der äußeren Fläche 47 erforderliche Winkelstellung bezüglich der Längsachse 21 einnehmen kann.

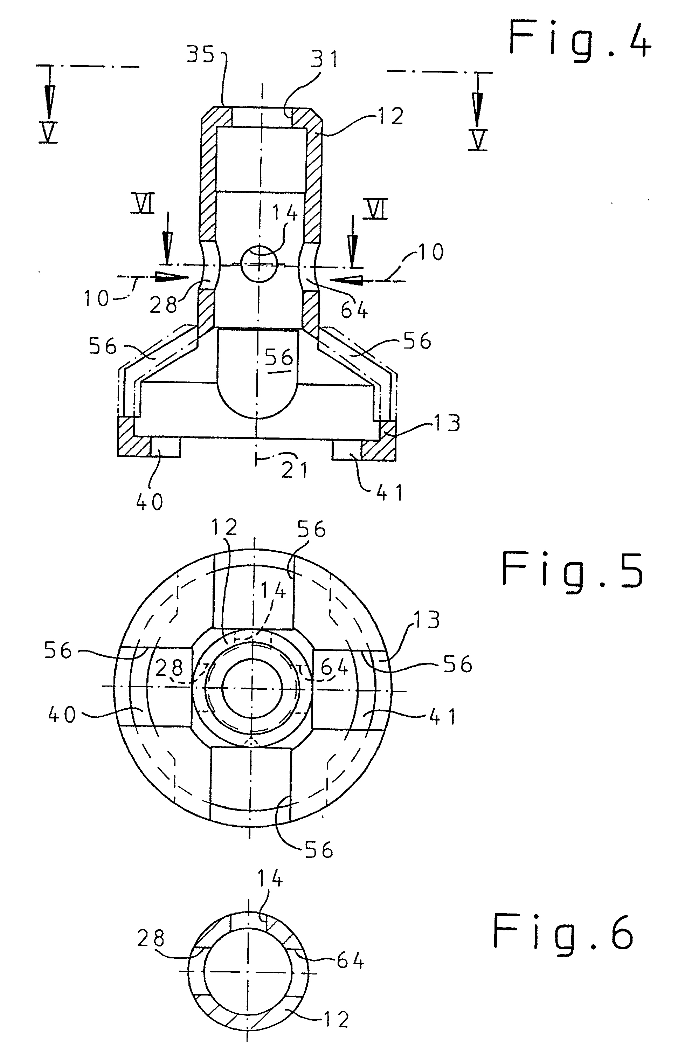

Die Fig. 4 bis 6 zeigen weiter Einzelheiten der Hülse 12 und des Fortsatzes 13. In radialer Richtung fluchtend mit der Bohrung 28 befindet sich in der Hülse 12 eine gleiche Bohrung 64, die in dem Einbaufall gemäß Fig. 1 durch die Innenwand der Hülse 12 und die Ringdichtungen 22, 23 abgedichtet ist. Die Bohrung 64 dient für den Fall, daß die Hülse 12 in einen Träger (vgl. 11 in Fig. 1) eingebaut wird, bei dem die Druckluft gemäß dem gestrichelten Pfeil 10 von rechts zugeführt wird. In diesem letzteren Fall ist dann die Bohrung 28 durch die Innenwand der Hülse 12 und die Ringdichtungen 22, 23 abgedichtet.

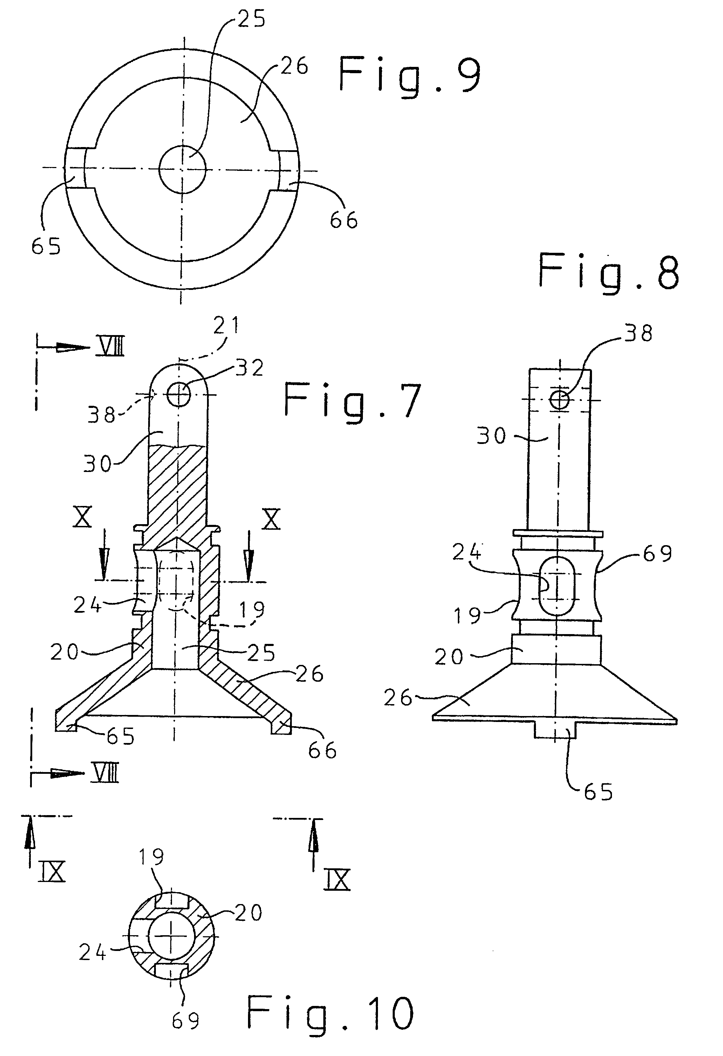

Die Fig. 7 bis 10 zeigen weitere Einzelheiten des Niederhalters 20 mit den damit einstückig ausgebildeten Lagerpfanne 26 und rückwärtigem Fortsatz 30. Am unteren Rand der Lagerpfanne 26 sind zwei diametral gegenüber angeordnete Kupplungsklauen 65 und 66 vorgesehen. Die Kupplungsklauen 65, 66 sind Bestandteile der Bajonettverbindung 44 und greifen im normalen Betrieb in Taschen 67 und 68 (Fig. 11 und 13 bis 15) des Blaskopfes 43 ein, um so die Bajonettverbindung 44 zu bilden. Diese Bajonettverbindung 44 wird dadurch gelöst, daß der Exzenterhebel 33 aus seiner in den Fig. 1 und 3 gezeigten Stellung um 180° nach rechts hinübergeschwenkt wird. Dabei legt sich die Stützfläche 36 auf die Stirnfläche 35, wodurch der rückwärtige Fortsatz 30 und mit ihm der Niederhalter 20 und die Lagerpfanne 26 relativ zu der Hülse 12 mit ihrem Fortsatz 13 nach oben gezogen werden. Dies schafft unten genügend axialen Raum, um - bei von der Fertigform 4 abgehobener Vorrichtung 1 - die Taschen 67, 68 von den Kupplungsklauen 65, 66 zu lösen. Der Blaskopf 43 wird dann um 90° um die Längsachse 21 gedreht und kann darauf nach unten abgezogen und ausgetauscht oder gewartet werden.

Gemäß den Fig. 8 und 10 ist diametral gegenüber dem Axialschlitz 19 ein gleicher Axialschlitz 69 in dem Niederhalter 20 spiegelbildlich angebracht. Der Axialschlitz 69 nimmt den Bolzen 18 (Fig. 1) auf, wenn der Niederhalter 20 um 180° um die Längsachse 21 gedreht eingebaut wird.

Die Fig. 11 bis 16 zeigen zusätzliche Einzelheiten des Blaskopfes 43.

## Patentansprüche

1. Vorrichtung (1) zum Fertigblasen eines Hohlglasgegenstands (2) aus einem Külbel (3) in einer Fertigform (4) einer Glasformmaschine,
mit einem Blaskopf (43), der mit einer Ausnehmung (50) über eine in der geschlossenen Fertigform (4) gehaltene Mündung (7) des Külbels (3) stülpbar und auf eine äußere Fläche (47) der Fertigform (4) aufsetzbar ist,
wobei Druckluft (10) durch ein in die Mündung (7) eintauchendes Blasrohr (45) des Blaskopfes (43) in das Külbel (3) einleitbar ist,
wobei Abluft (52) aus dem Hohlglasgegenstand (2) durch einen Freiraum (53) zwischen dem Blasrohr (45) und der Mündung (7) und durch wenigstens eine Auslaßdurchbrechung (55) in dem Blaskopf (43) abführbar ist,
wobei der Blaskopf (43) durch einen Adapter (vgl. 26, 20, 13, 12) mit einem Halter (8) verbunden ist,
wobei der Adapter eine relativ zu dem Halter (8) festlegbare (17,18) Hülse (12) und einen in der Hülse (12) axial verschiebbaren Niederhalter (20) aufweist,
wobei zwischen der Hülse (12) und dem Niederhalter (20) eine Feder (29) angeordnet ist und der Blaskopf (43) durch die Feder (29) in Richtung der Fertigform (4) vorgespannt ist,
wobei die Druckluft (10) dem Blasrohr (45) durch einen Kanal (25) in dem Adapter zuführbar ist,
und wobei durch den Kanal (25) Druckluft (62) auch durch Einlaßdurchbrechungen (58) in dem Blaskopf (43) in einen Ringraum (59) der Ausnehmung (50) des Blaskopfes (43) radial außerhalb der Mündung (7) einleitbar und durch Auslaßkanäle (61) des Blaskopfes (43) aus dem Ringraum (59) wieder auslaßbar ist,
**dadurch gekennzeichnet, daß** die Hülse (12) einen Fortsatz (13) aufweist, der Halteorgane (42) des Blaskopfes (43) hintergreifende Anschlagelemente (40,41) aufweist,
daß der Blaskopf (43) an seiner dem Halter (8) zugewandten Seite eine Kalotte (49) aufweist,
und daß eine Lagerpfanne (26) des Niederhalters (20) durch die Feder (29) zu der Kalotte (49) hin vorgespannt ist.

2. Vorrichtung nach Anspruch 1,
**dadurch gekennzeichnet, daß** die Lagerpfanne (26) hohlkegelstumpfförmig ausgebildet ist.

3. Vorrichtung nach Anspruch 1 oder 2,
**dadurch gekennzeichnet, daß** der Kanal (25) in einen Scheitel der Lagerpfanne (26) mündet.

4. Vorrichtung nach einem der Ansprüche 1 bis 3,
**dadurch gekennzeichnet, daß** die Einlaßdurchbrechungen (58) sich von einem Bereich des Blaskopfes (43) neben einem Einlaß des Blasrohrs (45) bis in den Ringraum (59) erstrecken.

5. Vorrichtung nach Anspruch 4,
**dadurch gekennzeichnet, daß** die Einlaßdurchbrechungen (58) durch einen in dem Blaskopf (43) ausgebildeten, das Blasrohr (45) umgebenden, zu der Lagerpfanne (26) hin offenen Ringkanal (60) mit Druckluft (10) gespeist werden.

6. Vorrichtung nach einem der Ansprüche 1 bis 5,
**dadurch gekennzeichnet, daß** im Betrieb bei auf die Fertigform (4) aufgesetztem Blaskopf (43) der Halter (8) mit der Hülse (12) gegen die Kraft der Feder (29) weiter in Richtung der Fertigform (4) bewegbar ist, bis zwischen den Halteorganen (42) des Blaskopfes (43) und den Anschlagelementen (40,41) der Hülse (12) ein Spalt (63) entstanden ist,
und daß der Spalt (63) so groß ist, daß der Blaskopf (43) jede zu seiner ebenen Auflage auf der äußeren Fläche (47) der Fertigform (4) erforderliche Winkelstellung bezüglich einer Längsachse (21) der Vorrichtung (1) einnehmen kann.

7. Vorrichtung nach einem der Ansprüche 1 bis 6,
**dadurch gekennzeichnet, daß** die Auslaßdurchbrechungen (55) des Blaskopfes (43) in einen Bereich zwischen der Lagerpfanne (26) und den Anschlagelementen (40,41) der Hülse (12,13) münden,
und daß in dem Fortsatz (13) wenigstens ein Auslaßfenster (56) für die Abluft (52) vorgesehen ist.

8. Vorrichtung nach einem der Ansprüche 1 bis 7.
**dadurch gekennzeichnet, daß** der Niederhalter (20) mit einem rückwärtigen Fortsatz (30) eine Durchbrechung (31) der Hülse (12) durchdringt,
und daß ein Teil des rückwärtigen Fortsatzes (30) aus der Hülse (12) herausbewegbar ist, um die Lagerpfanne (26) von der Kalotte (49) zu lösen.

9. Vorrichtung nach Anspruch 8,
**dadurch gekennzeichnet, daß** außerhalb der Hülse (12) an einer sich quer zu der Längsachse (21) der Vorrichtung (1) erstreckenden Achse (32) des rückwärtigen Fortsatzes (30) ein Exzenterhebel (33) angelenkt ist, dessen Exzenter (34) an einer Stirnfläche (35) der Hülse (12) abstützbar ist, um die herausbewegte Stellung des rückwärtigen Fortsatzes (30) zu fixieren.

10. Vorrichtung nach einem der Ansprüche 1 bis 9,
**dadurch gekennzeichnet, daß** der Blaskopf (43) und die Lagerpfanne (26) eine leicht lösbare Bajonettverbindung (44) bilden.

11. Vorrichtung nach Anspruch 10,
**dadurch gekennzeichnet, daß** die Bajonettverbindung (44) radial äußere Taschen (67,68) in dem Blaskopf (43) aufweist,
und daß in jede Tasche (67,68) eine am freien Ende der Lagerpfanne (26) ausgebildete Kupplungsklaue (65,66) eingreift.

## Claims

1. Device (1) for finish-blowing a hollow glass object (2) from a parison (3) in a finishing mould (4) of a glass forming machine,
having a blow head (43) which, with an orifice (50), can be placed over a mouth (7) - held in the closed finishing mould (4) - of the parison (3) and can be positioned on an outer surface (47) of the finishing mould (4),
wherein compressed air (10) can be introduced into the parison (3) through a blow pipe (45) - passing into the mouth (7) - of the blow head (43),
wherein outlet air (52) can be released out of the hollow glass object (2) through a free space (53) between the blow pipe (45) and the mouth (7) and through at least one outlet aperture (55) in the blow head (43),
wherein the blow head (43) is connected to a holder (8) by an adapter (cf. 26, 20, 13, 12),
wherein the adapter has a sleeve (12), which can be fixed (17, 18) relative to the holder (8), and a hold-down device (20) which is axially displaceably in the sleeve (12),
wherein between the sleeve (12) and the hold-down device (20) a spring (29) is disposed and the blow head (43) is pretensioned by the spring (29) in the direction of the finishing mould (4),
wherein the compressed air (10) can be supplied to the blow pipe (45) through a duct (25) in the adapter,
and wherein compressed air (62) can be introduced through the duct (25) and also through inlet apertures (58) in the blow head (43) into an annular chamber (59) in the orifice (50) of the blow head (43) radially outside the mouth (7), and can be let out of the annular chamber (59) through outlet ducts (61) in the blow head (43),
**characterised in that** the sleeve (12) has an extension (13) which has stop elements (40, 41) engaging behind holding members (42) of the blow head (43),
that the blow head (43) has a cap-shaped region (49) on its side facing the holder (8),
and that a bearing cup (26) of the hold-down device (20) is pretensioned towards the cap-shaped region (49) by the spring (29).

2. Device as claimed in claim 1,
**characterised in that** the bearing cup (26) is formed in a hollow truncated cone shape.

3. Device as claimed in claim 1 or 2,
**characterised in that** the duct (25) opens into an apex of the bearing cup (26).

4. Device as claimed in one of claims 1 to 3,
**characterised in that** the inlet apertures (58) extend from a region of the blow head (43) next to an inlet of the blow pipe (45) into the annular chamber (59).

5. Device as claimed in claim 4,
**characterised in that** the inlet apertures (58) are supplied with compressed air (10) through an annular duct (60) which is formed in the blow head (43), surrounds the blow pipe (45) and is open towards the bearing cup (26).

6. Device as claimed in one of claims 1 to 5,
**characterised in that** in operation, when the blow head (43) is placed on the finishing mould (4) the holder (8) can be moved with the sleeve (12) against the force of the spring (29) further in the direction of the finishing mould (4) until a gap (63) is produced between the holding members (42) of the blow head (43) and the stop elements (40, 41) of the sleeve (12),
and that the gap (63) is large enough for the blow head (43) to be able to assume any angular position with respect to a longitudinal axis (21) of the device (1), which is required for its level positioning on the outer surface (47) of the finishing mould (4).

7. Device as claimed in one of claims 1 to 6,
**characterised in that** the outlet apertures (55) of the blow head (43) open into a region between the bearing cup (26) and the stop elements (40, 41) of the sleeve (12, 13),
and that in the extension (13) at least one outlet window (56) for the outlet air (52) is provided.

8. Device as claimed in one of claims 1 to 7,
**characterised in that** with a rearward protrusion (30) the hold-down device (20) passes through an aperture (31) in the sleeve (12),
and that a part of the rearward protrusion (30) can move out of the sleeve (12) in order to release the bearing cup (26) from the cap-shaped region (49).

9. Device as claimed in claim 8,
**characterised in that** outside the sleeve (12) on an axis (32) of the rearward protrusion (30), which extends transverse to the longitudinal axis (21) of the device (1), a cam lever (33) is articulated, the cam (34) of which can bear against an end surface (35) of the sleeve (12) in order to fix the rearward protrusion (30) in its exited position.

10. Device as claimed in one of claims 1 to 9,
**characterised in that** the blow head (43) and the bearing cup (26) form an easily releaseable bayonet connection (44).

11. Device as claimed in claim 10,
**characterised in that** the bayonet connection (44) has pockets (67, 68) in the blow head (43) which are directed radially outwards,
and that each pocket (67, 68) is engaged by a couplingt claw (65, 66) formed on the free end of the bearing cup (26).

## Revendications

1. Dispositif (1) pour finir le soufflage d'un objet en verre creux (2) à partir d'une paraison (3) dans un moule de finition (4) d'une machine à mouler le verre,
avec une tête de soufflage (43) pourvue d'un évidement (50) qui permet de l'enfiler par-dessus un goulot (7) de la paraison (3) retenu dans le moule de finition (4) fermé et qui peut être posée sur une surface extérieure (47) du moule de finition (4),
de l'air comprimé (10) pouvant être introduit dans la paraison (3) par un tuyau de soufflage (45) de la tête de soufflage (43) qui pénètre dans le goulot (7),
l'air sortant (52) qui s'échappe de l'objet en verre creux (2) pouvant être évacué en passant par un espace vide (53) entre le tube de soufflage (45) et le goulot (7) et par au moins une ouverture d'évacuation (55) dans la tête de soufflage (43),
la tête de soufflage (43) étant reliée à un support (8) par au moins un adaptateur (cf. 26, 20, 13, 12),
l'adaptateur présentant un manchon (12) pouvant être immobilisé (17, 18) par rapport au support (8) et un organe presseur (20) coulissant dans le sens axial dans le manchon (12),
un ressort (29) étant disposé entre le manchon (12) et l'organe presseur (20) et la tête de soufflage (43) étant précontrainte en direction du moule de finition (4) par le ressort (29),
l'air comprimé (10) pouvant être amené au tube de soufflage (45) par un canal (25) dans l'adaptateur,
et de l'air comprimé (62) pouvant être amené à l'extérieur du goulot (7) dans le sens radial par le canal (25) en passant également par des ouvertures d'entrée (58) dans la tête de soufflage (43) vers un espace annulaire (59) de l'évidement (50) de la tête de soufflage (43) et pouvant être évacué de l'espace annulaire (59) par des canaux de sortie (61) de la tête de soufflage (43),
**caractérisé en ce que** le manchon (12) présente une saillie (13) qui présente des éléments de butée (40, 41) se mettant en prise derrière des organes de maintien (42) de la tête de soufflage (43),
**en ce que** la tête de soufflage (43) présente une calotte (49) sur son côté orienté vers le support (8),
et **en ce qu'**une cuvette d'appui (26) de l'organe presseur (20) est précontraint par le ressort (29) en direction de la calotte (49).

2. Dispositif selon la revendication 1, **caractérisé en ce que** la cuvette d'appui (26) est en forme de tronc de cône creux.

3. Dispositif selon la revendication 1 ou 2, **caractérisé en ce que** le canal (25) débouche dans un sommet de la cuvette d'appui (26).

4. Dispositif selon l'une ou l'ensemble des revendications 1 à 3, **caractérisé en ce que** les ouvertures d'entrée (58) s'étendent d'une zone de la tête de soufflage (43) proche d'une entrée du tube de soufflage (45) jusqu'à l'espace annulaire (59).

5. Dispositif selon la revendication 4, **caractérisé en ce que** les ouvertures d'entrée (58) sont alimentées en air comprimé (10) par un canal annulaire (60) formé dans la tête de soufflage (43), entourant le tube de soufflage (45) et ouvert en direction de la cuvette d'appui (26).

6. Dispositif selon l'une ou l'ensemble des revendications 1 à 5, **caractérisé en ce qu'**en fonctionnement, lorsque la tête de soufflage (43) est posée sur le moule de finition (4), le support (8) peut être déplacé avec le manchon (12) contre la force du ressort (29) et rapproché encore du moule de finition (4), jusqu'à ce qu'un interstice (63) se crée entre les organes de maintien (42) de la tête de soufflage (43) et les éléments de butée (40, 41) du manchon (12),
et **en ce que** l'interstice (63) est suffisamment grand pour que la tête de soufflage (43) puisse prendre n'importe quelle position angulaire par rapport à un axe longitudinal (21) du dispositif (1) nécessaire pour qu'elle repose à plat sur la surface extérieure (47) du moule de finition (4).

7. Dispositif selon l'une ou l'ensemble des revendications 1 à 6, **caractérisé en ce que** les ouvertures de sortie (55) de la tête de soufflage (43) débouchent dans une zone comprise entre la cuvette d'appui (26) et les éléments de butée (40, 41) du manchon (12, 13),
et **en ce qu'**il est prévu au moins une fenêtre de sortie (56) pour l'air sortant (52) dans la saillie (13).

8. Dispositif selon l'une ou l'ensemble des revendications 1 à 7, **caractérisé en ce que** l'organe presseur (20) possède une saillie orientée vers l'arrière (30) qui traverse une ouverture (31) dans le manchon (12),
et **en ce qu'**une partie de la saillie orientée vers l'arrière (30) peut être retirée du manchon (12) pour détacher la cuvette d'appui (26) de la calotte (49).

9. Dispositif selon la revendication 8, **caractérisé en ce qu'**il est prévu à l'extérieur du manchon (12) un levier excentrique (33) articulé sur un axe (32) de la saillie orientée vers l'arrière (30) perpendiculaire à l'axe longitudinal (21) du dispositif (1), dont l'excentrique (34) peut s'appuyer sur une surface frontale (35) du manchon (12) pour fixer la position retirée de la saillie orientée vers l'arrière (30).

10. Dispositif selon l'une ou l'ensemble des revendications 1 à 9, **caractérisé en ce que** la tête de soufflage (43) et la cuvette d'appui (26) forment un assemblage à baïonnette (44) facile à défaire.

11. Dispositif selon la revendication 10, **caractérisé en ce que** l'assemblage à baïonnette (44) présente des poches (67, 68) extérieures dans le sens radial dans la tête de soufflage (43),
et **en ce qu'**une griffe d'accouplement (65, 66) formée à l'extrémité libre de la cuvette d'appui (26) se met en prise dans chaque poche (67, 68).
